# EUROPÄISCHE PATENTSCHRIFT

(11) **EP 1 920 451 B1**
(45) Veröffentlichungstag und Bekanntmachung des Hinweises auf die Patenterteilung: **24.02.2021**
(21) Anmeldenummer: 06776985.1
(22) Anmeldetag: 21.08.2006
(51) Int. Cl.: H01H 33/662, B29C 45/14, B29L 31/34, B29C 45/16

(54) **VERFAHREN ZUR HERSTELLUNG VON SCHALTERPOLTEILEN FÜR NIEDER-, MITTEL- UND HOCHSPANNUNGSSCHALTANLAGEN, SOWIE SCHALTERPOLTEIL SELBST**
METHOD FOR PRODUCING CIRCUIT-BREAKER PARTS FOR LOW, MEDIUM AND HIGH-VOLTAGE SWITCHING STATIONS AND CORRESPONDING CIRCUIT-BREAKER PART
PROCEDE DE FABRICATION DE POLES D'INTERRUPTEUR DESTINES A DES DISPOSITIFS DE COMMUTATION BASSE, MOYENNE ET HAUTE FREQUENCE ET POLE D'INTERRUPTEUR

(30) Priorität: 22.08.2005 DE 102005039555
(43) Veröffentlichungstag der Anmeldung: 14.05.2008
(60) Teilanmeldung: 21151882.4
(73) Patentinhaber: ABB Schweiz AG, 5400 Baden (CH)
(72) Erfinder: CLAUS, Oliver, 40885 Ratingen (DE); GENTSCH, Dietmar, 40878 Ratingen (DE)
(74) Vertreter: Maiwald Patent- und Rechtsanwaltsgesellschaft mbH
(86) Internationale Anmeldenummer: PCT/EP2006/008195
(87) Internationale Veröffentlichungsnummer: WO 2007/022931

(56) Entgegenhaltungen:
- EP-A1- 1 107 409
- EP-A1- 1 367 681
- EP-A1- 1 453 164
- EP-A2- 0 319 659
- EP-A2- 1 150 405
- WO-A-2004/038748

## Beschreibung

Die Erfindung betrifft ein Verfahren zur Herstellung von Schalterpolteilen für Nieder-Mittel- und Hochspannungsschalter und Anlagen, sowie Schalterpolteil selbst, gemäß des Oberbegriff des Patentansprüche 1 und 9.

Schalterpolteile oder Kunststoffbauteileinheiten der eingangs beschriebenen Art umfassen Vakuumschaltkammern, welche in isolierendes Material eingebettet beziehungsweise mit diesem umgossen werden. Die Vakuumschaltkammern (VK) selber bestehen im wesentlichen aus einem keramischen Werkstoff (Isolator) der in der Regel zylindrisch ausgestaltet ist und an den Enden in den meist Fällen mit metallischen Deckel verschlossen ist. Auf der beweglichen oder den beweglichen Seiten ist am Deckel ein Faltenbalg angeordnet, der eine Bewegung eines oder auch beider Kontaktstücke über eine Stromzuleitung innerhalb der Vakuumschaltkammer ermöglicht. Die Stromzuleitung wird über eine Antriebsstange so geführt, dass die Kontaktstücke innerhalb des Vakuums der VK geöffnet oder geschlossen werden können. Wie gesagt befindet sich innerhalb der Vakuumschaltkammern eine Vakuumatmosphäre, damit ein möglichst rasches Löschen des beim Ein- und Ausschalten entstehenden Lichtbogens gewährleistet werden kann.

Aus der DE 10 2004 060 274 A1, sowie aus der DE 102 49 615 A1, sowie der US 3,955,167 sind Schalter mit Vakuumschaltkammern bekannt, die mit einem isolierenden Verguss, im wesentlichen einem Epoxidharzverguss versehen sind. Dieser wird bekanntermaßen bei einem Druck von maximal 6 Bar vorgenommen. Nachteilig hierbei ist, dass diese Form des Vergusses mit anschließendem Ausheilen des Epoxidharzes mehrere Stunden dauert und somit sehr aufwändig ist.

Diese Vakuumschaltkammern werden üblicherweise mit einer duroplastischen Epoxydharzmischung (bei Umgebungsdruck bzw. wenigen bar) umgossen, die zur Erhöhung der dielektrischen Außenfestigkeit einer Vakuumschaltkammer beiträgt und eine mechanische Funktionen übernimmt. Des Weiteren kann die Vakuumschaltkammer mit einem gummielastischen Werkstoff ebenfalls zur Steigerung der dielektrischen Außenfestigkeit ummantelt werden.

Der keramische Isolator einer Vakuumschaltkammer sowie das umgossene Epoxydharz haben jedoch einen deutlich unterschiedlichen Wärmeausdehnungskoeffizienten, was zur Folge hat, dass, wenn die Vakuumschaltkammern direkt in Epoxydharz eingegossen werden, diese Epoxydharzhülle bei entsprechender thermischer Wechselbeanspruchung rissempfindlich bleibt. Zudem ist der Herstellungsprozess dem Gießharzumgusswerkstoff angepasst. Die Herstellungszeiten (Zykluszeit) eines jeden Bauteiles, z.B. im Vakuumvergussverfahren oder Druckgelien/erfahren hergestellt, sind entsprechend lang bis zur Aushärtung des Bauteils und dessen Entnahme.

Zur Vermeidung einer möglichen Rißiniziierung ist es im Stand der Technik bekannt und vorgesehen, eine so genannte Dämpfungsschicht oder eine Kompensationsschicht zum Ausgleich dieser unterschiedlichen Wärmeausdehnungskoeffizienten zwischen Vakuumschaltkammeroberfläche und Epoxydharzhülle einzubringen. Hierzu werden meist Elastomere wie Gummi oder Hartgummiwerkstoffe verwendet, die als Manschetten ausgebildet sind, oder zuvor aufgegossen wurden und über die Vakuumschaltkammern gebracht werden, bevor diese in eine entsprechende Gießform gegeben und mit Epoxydharz (meistens mit einem Füllstoff) umgossen werden. Die besagte Kompensationsschicht wird dabei mit in den entstehenden Verbund eingegossen.

Dieses an sich vorteilhafte Fertigungsverfahren verhindert das ein Reißen der Epoxydhaizummantelung nach einem Verguss bzw. bei Wechseltemperaturbeanspruchung auftreten kann.

Die Herstellung einer Epoxidharzummantelung als solche bleibt aber extrem aufwändig.

Die EP 1 367 681 A1 offenbart ein Herstellungsverfahren für Schalterpolteile mit Vakuumschaltkammer und äußerer Isolationshülle für Mittel- und Hochspannungsschalter, wobei die äußere Isolationshülle in einem Kunststoffspritzgussverfahren hergestellt wird.

Der Erfindung liegt daher die Aufgabe zugrunde ein Verfahren zur Herstellung von Vakuumschaltkammerpolteilen dahingehend zu verbessern, dass das Fertigungsverfahren an sich einfacher, und das so hergestellte Schalterpolteil allen technischen Anforderungen entspricht, und ein entsprechendes Schalterpolteil zur Verfügung stellt.

Die gestellte Aufgabe ist bei einem Verfahren der gattungsgemäßen Art erfindungsgemäß durch die kennzeichnenden Merkmale des Patentanspruches 1 gelöst.

Weitere vorteilhafte Ausgestaltungen sind in den übrigen abhängigen Ansprüchen angegeben.

Kern der verfahrensgemäßen Erkundung ist dabei, dass die äußere Isolationshülle in einem Kunststoffspritzgussverfahren hergestellt wird, indem eine Vakuumschaltkammerkammer umspritzt wird. Hierbei liegt die Besonderheit in der Anwendung der Spritzgusstechnologie. Diese grenzt sich dabei erheblich von der Epoxidharzverguss-Technologie ab. Beim Kunststoffpritzguss werden üblicherweise Drücke verwendet in der Größenordnung größer 80 bar. Die Prozesstemperaturen liegen bei ca. 160 °C. Unter diesen Bedingungen, insbesondere bei diesen Drücken eine Vakuumschaltkammer zu umspritzen wurde bisher deshalb vermieden, weil zum einen die im wesentlichen aus keramischem Werkstoff bestehende Vakuumschaltkammer diesem Druck nicht standhalten könne, und zum anderen zumindest die Vakuumschaltkammer hernach keine ausreichende Vakuumatmosphäre mehr haben könnte. Erste Überlegungen besonders praktische Versuche haben jedoch gezeigt, dass dies entgegen den technischen Erwartungen möglich ist.

Damit eröffnen sich vielfältige fertigungstechnologische Möglichkeiten. Unter anderem auch, dass die durch Kunststoff im allgemeinen erzielbaren isolatorischen und dielektrischen Eigenschaften optimal sind. Ganz besonders vorteilhaft ist aber das Wärmeausdehnungsverhalten der auf diese Weise verarbeitbaren und einsetzbaren Kunststoffe. Somit erfüllt die im Kunststoffspritzguss erstellte Umhüllung der Vakuumschaltkammer kummulativ alle Anforderungen und darüber hinaus sind die nunmehr einstellbaren Materialparameter extrem variabel und an die technischen Anforderungen anpassbar.

Mit dem erfindungsgemäßen Einsatz dieser Technologie eröffnen sich nunmehr einige Möglichkeiten auch in der Varianz einsetzbarer Materialien.

Dabei können nun eine Vielzahl von bekannten Thermoplasten verwendet werden. Dies ist in diesem Zusammenhang erheblich verschieden von Expoxidharzverguss, weil dies ein spezieller Duroplast ist.

Mit Thermoplasten werden die meisten modernen kunststoffspritzgussfähigen Kunststoffe erfasst. Durch die erfindungsgemäße Einbeziehbarkeit von nunmehr auch Thermoplasten können Isolationshüllen für Vakuumschaltkammern nunmehr technisch an alle möglichen Bedingungen individuell angepasst werden. Dies ist mit Epoxidharzen nicht, oder nur sehr eingeschränkt möglich.

Weiterhin können nach dem genannten Verfahren Duroplasten verarbeitet werden. Dabei liegt die Betonung erfindungsgemäß auf der Spritzgusstechnologie. Nicht etwa ein Epoxidharzverguss der herkömmlichen Art.

Mit dem erfindungsgemäßen Verfahren können für den genannten Zweck auch Gummielastische Kunststoffe verarbeitet werden.

Bei dem erfindungsgemäßen Verfahren wird weiterhin eine Kunststoffumbettung des Bauteiles bzw. der Einheit vorgesehen, die diese mit einer Kompensationsschicht ummantelt.

Erfindungsgemäß ist angegeben, dass zur Erzielung guter Hafteigenschaften ein Haftvermittler im Bereich einer oder auch mehrerer Grenzschichten eingesetzt wird. Mit diesem wird die dauerhafte Anhaftung der Oberflächen aneinander gewährleistet, was bei der Isolation aus dielektrischen Gründen besonders wichtig ist.

Eine gute Haftung wird erfindugnsgemäss dadurch erreicht, dass durch Tauch-, Spritz-, Lackier- oder Plasmaverfahren die Grenzflächen dotiert werden können, so dass eine entsprechend gute Haftung an den Grenzflächen erzeugt wird.

In weiterer vorteilhafter Ausgestaltung ist angegeben, dass die Isolationshülle des Schalterbauteil aus mindestens zwei Kunststoffschichten besteht, die nacheinander aufgebracht werden. Damit entsteht ein Verbundwerkstoff, der in geeigneter Weise an besondere Forderungen angepasst werden kann. Dies ist bei Schalterpolteilen nunmehr durch den erfindungsgemäßen Einsatz der Kunststoffspritzgusstechnologie besonders einfach möglich.

In weiterer vorteilhafter Ausgestaltung ist angegeben, dass zunächst eine gummielastische Schicht auf das Bauteil bzw. die Vakuumkammer aufgebracht wird, die mit einem Kunststoff umspritzt werden und nachfolgend weitere Schichten aus einem Kunststoff erhält.

In weiterer vorteilhafter Ausgestaltung ist angegeben, dass zur Angleichung des Ausdehnungskoeffinzienten der Isolationshülle an den Werkstoff der Vakuumschaltkammer, der Kunststoff vor Einbringung in den Spritzguss mit Zusatzstoffen wie Partikeln, Kugeln, Hohlkugeln oder Fasern aus keramischen Werkstoffen oder Glas vermengt wird. Mit diesen Zusatzstoffen können auf sehr einfache Weise individuelle Materialeigenschaften auf sehr einfach Weise gestaltet werden.

Fertigungstechnisch ist dies besonders fortschrittlich, dass die Schalterpolteile nunmehr mit einem spritzgussfähigem, duroplastischen Kunststoff umgossen werden. Werden entsprechende Kunststoffe (auch mit Füllstoffen: Teilchen und / oder Fasern) gewählt, können diese auch einen vergleichbaren Wärmeausdehnungskoeffizient wie das verwendete Metall beziehungsweise der keramische Werkstoff aufweisen. Zu den spritzgusstechnisch verarbeitenden Kunststoffen gehören: rieselfähige Materialien, Feuchtpressmassen und andere.

Dabei ist besonders überraschend gemäß der Erfindung eine Vakuumschaltkammer, die im Wesentlichen aus einem keramischen Werkstoff besteht, überhaupt unter den Bedingungen des Kunststoffspritzgusses ummanteln zu können. Die im Kunststoffspritzguss auftretenden Parameter bedeuten einer enorm höhere Beanspruchung der Vakuumschaltkammer. Dabei wird nämlich völig anders als bei Epoxidharzverguss mit mehr als 100 bar Druckbeaufschlagung gearbeitet.

Lange versuchsreihen hierzu haben aber das überraschende Ergebnis geliefert, dass dies ohne das die Vakuumschaltkammer zerstört wird, möglich ist.

Bei der Verwendung derartiger Massen ergibt sich, dass, anders als bei Epoxydharz, wegen der Ähnlichkeit der Wärmeausdehnungskoeffizienten nunmehr zusätzlich auch eine sehr dünnwandige Kompensationsschicht zur Sicherstellung einer dielektrisch dichten Fuge (z.B. ein Haftvermittler) gewählt werden kann.

Temperaturwechselbeanspruchungen führen nunmehr nicht mehr zu einem Reißen des Vergussmantels. Die Vergussmasse aus den genannten duroplastischen Spritzgußmaterialen können direkt an die Vakuumschaltkammer oder auch auf eine sehr dünnwandige Kompensationsschicht aufgespritzt werden, die sich auf der Oberfläche der einzugießenden Einheit befinden.

Gemeint sind mit den an sich bekannten Verfahren des Spritzgusses sind auch Spezialspritzgussverfahen wie Preß-, Spritzpreß- oder Spritzgussverfahren gleichermaßen gemeint. Die verarbeitbaren Materialen können als Granulat, Stäbchen, teigartigen oder auch flüssigen Massen vorliegen. Neben einem "einlagigen" kann auch ein "mehrlagiges" Umspritzen bzw. Umgießen zur Herstellung des Bauteiles durchgeführt werden. Die Kunststoffe können zudem einen vergleichbaren Wärmeausdehnungskoeffizient wie das verwendete Metall beziehungsweise der keramische Werkstoff aufweisen auch unter Verwendung von Füllstoffen: z.B. Teilchen, Kugeln, Hohlkugeln und / oder Fasern.

Beim Umgießen einer Vakuumschaltkammer mit einem gummielastischen Werkstoff ist der Herstellungsprozess dem entsprechenden Werkstoff angepasst. Die Herstellungszeiten (Zykluszeit) eines jeden Bauteiles, z.B. im Handverguss-, Vakuumverguss- oder Niederdruckverfahren hergestellt, sind entsprechend lang bis zur Aushärtung des Bauteils und dessen Entnahme.

Auch die Verwendung gummielastischer Werkstoffe im direkten Spritzgussverfahren sind vorteilhaft. Werden entsprechende Materialien (auch mit Füllstoffen: Teilchen, Kugeln, Hohlkugeln und / oder Fasern) gewählt, können diese neben der Steigerung der dielektrischen Außenfestigkeit der Einheit auch mechanische Funktionen übernehmen. Zu den spritzgusstechnisch verarbeitenden Materialien gehören z.B. Silikonwerkstoffe und andere.

Zur Erzielung guter Hafteigenschaften können besagten Haftvermittler verwendet werden.

Möglichkeiten hierzu bestehen darin, durch Tauchverfahren die Grenzflächen zu dotieren, so dass eine entsprechend gute Haftung an den Grenzflächen erzeugt wird. Damit wird die Fertigung deutlich vereinfacht. Dies wird daran deutlich, wenn man die nunmehr erfindungsgemäß vorliegenden Fertigungsschritte mit denen aus dem Stand der Technik vergleicht.

Bei dem erfindungsgemäßen Verfahren wird die entsprechend präparierte Vakuumschaltkammer in eine Spritzgussform eingelegt und sodann der duroplastische oder gummielastische Kunststoff direkt auf die entsprechende Einheit aufgebracht. Die Aushärtungszeit des in diesem Verfahren hergestellten Bauteiles ist gegenüber der Reaktionszeit des mit Epoxydharz hergestellten Bauteiles kürzer. Beim Epoxydharz müssen mehrere Basiskomponenten, nämlich Harz, Härter, Füllstoff, Beschleuniger, Flexibilisator, und Farbstoff beigegeben werden, welche erst in Gänze das Gießharz ergeben und in einer beheizten Form miteinander reagieren (zumindest ein Teil). Es ist erforderlich, dass Harz, Härter, Füllstoff, der organisch oder anorganisch sein kann, unter Vakuum und entsprechender Temperatur, Zugabe eines Beschleunigers und ggfs. Additiven in ein reaktives Gemisch versetzt werden. Für die vollständige Vernetzung muss das Bauteil eine Nachhärtung erfahren, die mehrere Stunden lang sein kann.

Im Gegensatz dazu macht die duroplastische Spritzgusstechnik oder auch unter Verwendung eines gummielastischen Werkstoffes diesen Verfahrensschritt aus dem Stand der Technik gänzlich obsolet und liefert im Ergebnis dennoch ein Polteil, welches die oben genannten Eigenschaften aufweist und zudem temperaturwechselbeständig ist, ebenso wie ein mit Epoxydharz ummanteltes Polteil mit Kompensationsschicht.

Insgesamt ergeben sich die Vorteile beim erfindungsgemäßen Verfahren darin, dass mit geringer Wandstärken gearbeitet werden kann, größere Freiheitsgrade bei der Formgestaltung der Bauteile geboten sind und bei entsprechend gewählten kleinen Wandstärken ein geringeres Bauteilgewicht erreicht werden kann, so dass insgesamt auch ein geringerer Materialeinsatz erforderlich ist.

In der Kunststoffspritzgusstechnik sind Maßgenauigkeiten und ein hoher Standard im Bereich der Qualitätssicherungsmaßnahmen bei der Bauteilproduktion deutlich höher, als beim Epoxydharzverguss. In der Fertigung lassen sich kurze Zykluszeiten realisieren, die zu einer Erhöhung der Fertigungskapazität führen (Produktivität). Dadurch werden geringere Stückkosten bei der Herstellung von Kunststoffbauteileinheiten erzielt. Dieser Prozess lässt sich zudem leicht unter Zuhilfenahme von verfügbaren Standardkomponenten automatisieren.

Die genannten Vorteile verkörpern sich an dem erfindungsgemäßen Schalterpolteil.

Die Erfindung ist in der Zeichnung dargestellt und nachfolgend näher beschrieben.

### Es zeigt:

Figur 1: Schnittdarstellung Polteil mit Vakuumschaltkammer
Figur 2: mit Kompensationsschicht
Figur 3: mit mehrlagiger Kunststoffbeschichtung
Figur 4: mit Gradientenbereich

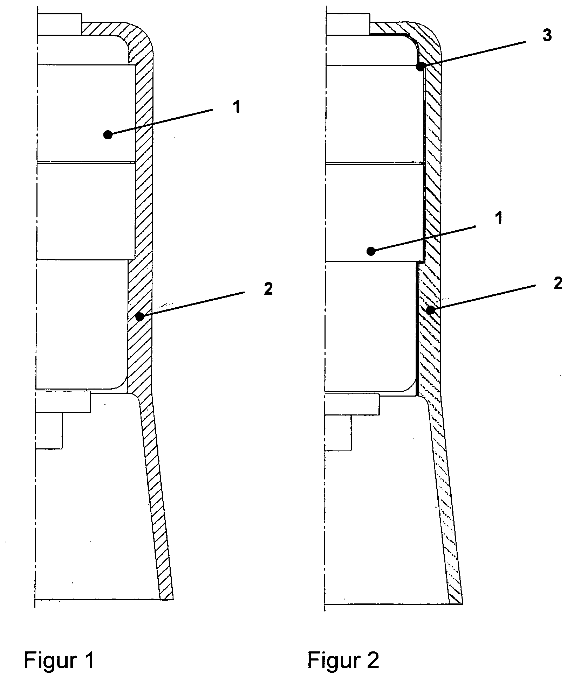

Figur 1 zeigt schematisch eine Vakuumschaltkammer. Kontaktstücke und Antriebsbauteile wie auch Antriebsstangen sind nicht dargestellt.

Vakuumschaltkammer und Anschlusskontakte werden in eine Spritzgussform eingelegt, fixiert und danach umspritzt. Hierbei ist die Vakuumschaltkammer zur Grenzflächendotierung und zur besseren Haftung mit einem Haftvermittler, Vermittlungsstoffen oder Dotierstoffen versehen, die über die Eindringtiefe zur Vakuumschaltkammergrenzfläche und in den Kunststoff eine entsprechende mechanische und haftschlüssige Verbindung schaffen.

Am Ende des Spritzgussvorganges wird die Form geöffnet und das fertige Schalterpolteil entnommen.

In der Figur 1 ist daher die Skizze eines Polteiles bestehend aus einer Vakuumschaltkammer (1) und dem Umguss (2) gezeigt. Der Umguss (2) zeigt im Querschnitt den duroplastischen oder gummielastischen Kunststoff, der in einer Form auf das Bauteil (1) gespritzt wird.

Die Figur 2 zeigt auf der hier dargestellten Vakuumschaltkammer (1) eine Kompensationsschicht, die wie oben beschrieben auf das einzugießende Bauteil aufgebracht wird. Auf die Kompensationsschicht (3) wird der duroplastische oder gummielastische Kunststoff aufgespritzt

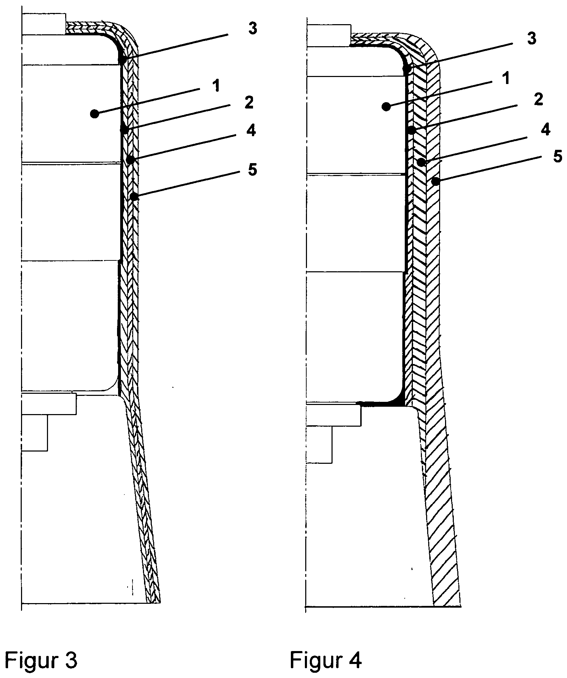

In der Figur 3 ist ein Polteil dargestellt, das neben der Vakuumschaltkammer (1) mit mehreren Lagen Kunststoff beschichtet ist. Die Vakuumschaltkammer ist mit einer Kompensationsschicht (3) beschichtet.

Es kann auch ein Gradientenbereich vorliegen, wie es in der Figur 4 dargestellt ist.

## Patentansprüche

1. Verfahren zur Herstellung von Schalterpolteilen mit Vakuumschaltkammer (1) und äußerer Isolationshülle (2) für Mittel- und Hochspannungsschalter, wobei die äußere Isolationshülle (2) in einem Kunststoffspritzgussverfahren hergestellt wird,
**dadurch gekennzeichnet, dass** die Vakuumschaltkammer (1) bei einem Druck oberhalb von 80 Bar umspritzt wird, und dass vor der Kunststoffumbettung des Bauteiles dieses mit einer Kompensationsschicht (3) zum Ausgleich unterschiedlicher Wärmeausdehnungskoeffizienten ummantelt wird, und dass zur Erzielung guter Hafteigenschaften ein Haftvermittler im Bereich mindestens einer Grenzschicht zwischen Oberflächen benachbarter Schichten eingesetzt wird, indem durch Tauch-, Spritz-, Lackier- oder Plasmaverfahren die Grenzflächen dotiert werden, so dass eine entsprechend gute Haftung an den Grenzflächen erzeugt wird.

2. Verfahren nach Anspruch 1,
**dadurch gekennzeichnet, dass** die Isolationshülle (2) nach dem genannten Verfahren aus einem Thermoplasten hergestellt.

3. Verfahren nach Anspruch 1,
**dadurch gekennzeichnet, dass** die Isolationshülle (2) nach dem genannten Verfahren aus einem Duroplasten hergestellt wird.

4. Verfahren nach Anspruch 1,
**dadurch gekennzeichnet, dass** die Isolationshülle (2) nach dem genannten Verfahren aus einem gummielastischen Kunststoff hergestellt wird.

5. Verfahren nach einem der vorstehenden Ansprüche,
**dadurch gekennzeichnet, dass** die Isolationshülle (2) des Schalterpolteils aus mindestens zwei Kunststoffschichten (2, 4, 5) besteht, die nacheinander aufgebracht werden.

6. Verfahren nach einem der vorstehenden Ansprüche,
**dadurch gekennzeichnet, dass** zunächst eine gummielastische Schicht auf das Bauteil bzw. die Vakuumschaltkammer (1) aufgebracht wird, die mit einem Kunststoff umspritzt werden und nachfolgend weitere Schichten aus einem Kunststoff erhält.

7. Verfahren nach Anspruch 6,
**dadurch gekennzeichnet, dass** zur Angleichung des Ausdehnungskoeffizienten der Isolationshülle (2) an den Werkstoff der Vakuumschaltkammer (1), der Kunststoff vor Einbringung in den Spritzguss mit Zusatzstoffen wie Partikeln, Kugeln, Hohlkugeln oder Fasern aus keramischen Werkstoffen oder Glas vermengt wird.

## Claims

1. A method of producing switch pole parts with a vacuum switching chamber (1) and an outer insulation sheath (2) for medium and high-voltage switchgears, the outer insulation sheath (2) being produced in a plastic injection moulding process, **characterised in that** the vacuum switching chamber (1) is encapsulated at a pressure above 80 bar, and **in that**, before the plastic encapsulation of the component, the latter is encapsulated with a compensation layer (3) to compensate different coefficients of thermal expansion, and **in that**, in order to achieve sufficient adhesive properties, an adhesion promoter is used in the region of at least one boundary layer between surfaces of adjacent layers, **in that** the boundary surfaces are doped by dipping, spraying, painting or plasma processes, so that correspondingly sufficient adhesion is provided at the boundary surfaces.

2. Method according to claim 1,
**characterised in that** the insulation sheath (2) is produced from a thermoplastic by said method.

3. Method according to claim 1,
**characterized in that** the insulation sheath (2) is produced from a thermoset by said method.

4. Method according to claim 1,
**characterized in that** the insulation sheath (2) is produced from a rubber-elastic plastic by said method.

5. Method according to one of the preceding claims,
**characterised in that** the insulation sheath (2) of the switch pole part consists of at least two plastic layers (2, 4, 5) which are applied in succession.

6. Method according to one of the preceding claims,
**characterised in that** a rubber-elastic layer is first applied to the component or the vacuum switching chamber (1), which is overmoulded with a plastic and subsequently receives further layers of a plastic.

7. Method according to claim 6,
**characterised in that,** in order to match the coefficient of expansion of the insulating sheath (2) to the material of the vacuum interrupter chamber (1), the plastic is mixed with additives such as particles, spheres, hollow spheres or fibres of ceramic materials or glass before being introduced into the injection moulding.

## Revendications

1. Procédé de fabrication de parties de pôles de commutateurs munies d'une chambre de commutation à vide (1) et d'une gaine d'isolation extérieure (2) pour des commutateurs moyenne et haute tension, la gaine d'isolation extérieure (2) étant fabriquée dans un procédé de moulage par injection de matière plastique, **caractérisé en ce que** la chambre de commutation à vide (1) est surmoulée à une pression supérieure à 80 bar, et **en ce qu'**avant l'enrobage par de la matière plastique du composant, celui-ci est enveloppé avec une couche de compensation (3) pour l'équilibrage de coefficients de dilatation thermique différents, et **en ce que**, pour obtenir de bonnes propriétés d'adhésion, un promoteur d'adhésion est utilisé dans la zone d'au moins une couche limite entre des surfaces de couches voisines, par dopage des interfaces par des procédés d'immersion, de pulvérisation, de vernissage ou plasmatiques, de manière à générer une adhésion appropriée sur les interfaces.

2. Procédé selon la revendication 1,
**caractérisé en ce que** la gaine d'isolation (2) est fabriquée par le procédé indiqué à partir d'un thermoplastique.

3. Procédé selon la revendication 1,
**caractérisé en ce que** la gaine d'isolation (2) est fabriquée par le procédé indiqué à partir d'un thermodurcissable.

4. Procédé selon la revendication 1,
**caractérisé en ce que** la gaine d'isolation (2) est fabriquée par le procédé indiqué à partir d'une matière plastique ayant l'élasticité du caoutchouc.

5. Procédé selon l'une quelconque des revendications précédentes,
**caractérisé en ce que** la gaine d'isolation (2) de la partie de pôle de commutateur est constituée par au moins deux couches de matière plastique (2, 4, 5), qui sont appliquées successivement.

6. Procédé selon l'une quelconque des revendications précédentes,
**caractérisé en ce qu'**une couche ayant l'élasticité du caoutchouc est tout d'abord appliquée sur le composant ou la chambre de commutation à vide (1), qui est surmoulée avec une matière plastique, et des couches supplémentaires en une matière plastique sont ensuite obtenues.

7. Procédé selon la revendication 6,
**caractérisé en ce que**, pour l'harmonisation des coefficients de dilatation de la gaine d'isolation (2) sur le matériau de la chambre de commutation à vide (1), la matière plastique est mélangée avant l'introduction dans le moulage par injection avec des additifs tels que des particules, des billes, des billes creuses ou des fibres en matériaux céramiques ou verre.
